# EUROPEAN PATENT APPLICATION

(11) **EP 4 563 614 A1**
(43) Date of publication of application: **04.06.2025**
(21) Application number: 23307091.1
(22) Date of filing: 29.11.2023
(51) Int. Cl.: C08G 59/40, C08G 59/68, C08G 65/18, C08G 65/26, C09J 163/00, C09J 171/00, C09D 163/00, C09D 171/00

(54) **CURABLE COMPOSITION COMPRISING A MULTIFUNCTIONAL HALOGENATED THIOXANTHONE AND ITS USES**

(71) Applicant: ARKEMA FRANCE, 92800 Puteaux (FR)
(72) Inventor: YOUNG, Hannah, WETHERBY, LS22 7NS (GB); PLENDERLEITH, Richard, WETHERBY, LS22 7NS (GB)
(74) Representative: Arkema Patent

(57) **Abstract**

The present invention relates to a curable composition comprising: a) a cationically polymerizable component, b) a cationic photoinitiator component comprising at least one iodonium salt, c) a photosensitizer component comprising at least one multifunctional halogenated thioxanthone. It further relates to processes for curing such compositions, cured products thus obtained and uses of such products.

## Description

### Field of the Invention

The present invention relates to a curable composition comprising: a) a cationically polymerizable component; b) a cationic photoinitiator component comprising at least one iodonium salt; and c) a photosensitizer component comprising at least one multifunctional halogenated thioxanthone. It further relates to processes for curing such compositions, cured products thus obtained and uses of such products.

### Background of the Invention

Photo-induced polymerization has been widely used for about 50 years and has become popular in the printing industry, electronic product manufacturing, coatings, adhesives, inks and other fields. However, concerns have arisen with respect to the toxicity of this technology both to humans and to the environment, which have prompted several changes. First, the mercury lamp initially used was replaced with LED lamps. Also, among UV curing technologies, cationically UV-initiated photo-polymerization was preferred to free-radical photo-polymerization because it uses monomers which have reduced toxicity.

In turn, these changes resulted in photoinitiators not matching the energy of the light source. Especially, onium salts initiators have poor absorption at wavelengths above 350 nm. It was thus necessary to use photosensitizers such as anthracene compounds, benzophenones or thioxanthones (TX) to expand the spectra region over which these photoinitiators are effective. Monofunctional TX such as ITX, DETX and CPTX have thus been used for this purpose, in combination with photoinitiators in the form of iodonium salts (US2001/0036591; US2022/0056285; Jung-Dae Cho et al., European Polymer Journal 41 (2005) 367-374) or sulfonium salts (CN111825781). However, monofunctional TX have come under scrutiny recently, because they are suspected to have reproductive toxicity. In addition, they may migrate out of the cured formulation, which should be avoided for food packaging applications.

Multifunctional TX have thus appeared as a promising alternative. Unfortunately, their lower active content requires higher loading than monofunctional TX, especially CPTX, in order to achieve a comparable curing speed.

The inventors have now shown that multifunctional halogenated thioxanthones allow reaching the same curing speed as CPTX at the same weight percentage, contrary to difunctional non-halogenated TX. In addition, they reduce post-cure yellowing, which is beneficial for some applications.

### Summary of the Invention

A first aspect of the invention is a UV-curable composition comprising: a) a cationically polymerizable component; b) a cationic photoinitiator component comprising at least one iodonium salt; and c) a photosensitizer component comprising at least one multifunctional halogenated thioxanthone.

Another aspect of the invention is a process for the preparation of a cured product, comprising curing the composition of the invention, in particular by exposing the composition to radiation such as UV, near-UV, visible, infrared and/or near-infrared radiation or to an electron beam.

Further aspects of the invention relate to a cured product obtained by curing the aforesaid composition or according to the above process.

Yet another aspect of the invention pertains to the use of a multifunctional halogenated thioxanthone as a photosensitizer of a photoinitiator component comprising at least one iodonium salt.

### Description of Figures

Figure 1 shows the cure speed of formulations of Example 1 under 395 nm LED irradiation.
Figure 2 shows the cure speed of formulations of Example 2 under 395 nm LED irradiation.
Figure 3 shows the cure speed of formulations of Example 3 under 395 nm LED irradiation.
Figure 4 shows the cure speed of formulations of Example 4 under 395 nm LED irradiation.

### Detailed Description

### Definitions

In the present application, the term "comprise(s) a/an" means "comprise(s) one or more". In addition, when ranges are mentioned, they include the lower and upper limit.

The term « alkyl » means a monovalent saturated hydrocarbon radical of formula -CₙH₂ₙ₊₁ wherein n is integer of at least 1. An alkyl may be linear or branched. An alkyl may have from 1 to 20, in particular 1 to 12, more particularly 1 to 6, carbon atoms. Examples of alkyl groups include methyl, ethyl, propyl, isopropyl, butyl, isobutyl, tert-butyl, pentyl and hexyl.

The term « haloalkyl » means an alkyl substituted by one or more halogen atoms.

The term « perfluoroalkyl » means an alkyl wherein all of the hydrogen atoms are replaced by fluorine.

The term « aryl » means an aromatic hydrocarbon group. An aryl may have from 5 to 12, in particular 6 to 12, carbon atoms.

The term « heteroaryl » means an aryl wherein one or more of the carbon ring atoms are replaced by a heteroatom independently selected from O, N and S.

The term « aralkyl » means an alkyl substituted by an aryl group. An aralkyl may have from 7 to 26, in particular 7 to 18, more particularly 7 to 12, carbon atoms. An example of an aralkyl group is benzyl (-CH₂-Phenyl).

The term « alkaryl » means an aryl substituted by an alkyl group. An alkaryl may have from 7 to 26, in particular 7 to 18, more particularly 7 to 12, carbon atoms. An example of an alkaryl group is tolyl -Phenyl-CH₃).

The term « halogen » means an atom selected from C!, Br, I and F.

The term « alkylene » means a divalent saturated hydrocarbon radical of formula -CₙH₂ₙ- wherein n is integer of at least 1. An alkylene may be linear or branched. An alkylene may have from 1 to 20, in particular 1 to 12, more particularly 1 to 6, carbon atoms. Examples of alkylene groups include ethylene (-CH₂-CH₂-) and 1,2-propylene (-CH₂-CH(CH₃)-).

The term « alkenyl » means a monovalent unsaturated hydrocarbon radical. An alkenyl may be linear or branched. An alkenyl may have from 2 to 20, in particular 2 to 12, more particularly 2 to 6, carbon atoms. Examples of alkenyl groups include vinyl (-CH=CH₂) and allyl (-CH₂-CH=CH₂).

The term « cycloalkyl » means a monovalent saturated alicyclic hydrocarbon radical comprising a cycle. A cycloalkyl may have from 3 to 8, in particular from 5 to 7, carbon atoms. Examples of cycloalkyl groups include cyclopentyl, cyclohexyl and isobornyl.

The term « heterocycloalkyl » means a cycloalkyl wherein one or more of the carbon ring atoms are replaced by a heteroatom independently selected from O, N and S.

The term « alkoxy » means a group of formula -O-alkyl wherein alkyl is as defined above.

The term « aryloxy » means a group of formula -O-aryl wherein aryl is as defined above.

The term « thioalkyl » means a group of formula -S-alkyl wherein alkyl is as defined above.

The term « thioaryl » means a group of formula -S-aryl wherein aryl is as defined above.

The term « hydrocarbon radical » means a radical consisting of carbon and hydrogen atoms.

Unless mentioned otherwise a hydrocarbon radical is not substituted or interrupted by any heteroatoms (O, N or S). A hydrocarbon radical may be linear or branched, saturated or unsaturated, aliphatic, cycloaliphatic or aromatic.

The term « hydroxyl » means a group of formula -OH.

The term « hydroxyalkyl » means an alkyl substituted by a hydroxyl group.

The term « thiol » means a group of formula -SH.

The term « alkylthiol » means an alkyl substituted by a thiol group.

The term « amino » means a group of formula -NRₐR_{b}, wherein Rₐ and R_{b} are independently selected from H, alkyl, aryl and aralkyl.

The term « alkylamino » means an alkyl substituted by an amino group.

The term « carboxyl » means a group of formula -COOH.

The term « ester bond » means a -C(=O)-O- or -O-C(=O)- bond.

The term « ether bond » means a -O- bond.

The term « carbonate bond » means a -O-C(=O)-O- bond.

The term « urethane or carbamate » means a -NRₐ-C(=O)-O- or -O-C(=O)-NRₐ- bond.

The term « amide bond » means a -C(=O)-NRₐ- or -NRₐ-C(=O)- bond wherein Rₐ is as defined above.

The term « urea bond » means a -NRₐ-C(=O)-NRₐ- bond wherein Rₐ is as defined above.

The term « aliphatic » means an acyclic compound. It may be linear or branched, saturated or unsaturated. It may be substituted by one or more groups, for example selected from alkyl, hydroxyl, halogen (Br, Cl, I), carbonyl, amino, carboxyl, -C(=O)-OR', -C(=O)-O-C(=O)-R', each R' being independently a C1-C6 alkyl. It may comprise one or more bonds selected from ether, ester, amide, urethane, urea and combinations thereof.

The term « acyclic » means a compound that does not comprise any rings The term « cycloaliphatic » means a non-aromatic cyclic compound. It may be substituted by one or more groups as defined for the term « aliphatic ». It may comprise one or more bonds as defined for the term « aliphatic ».

The term « aromatic » means a compound comprising an aromatic ring, which means that it respects Hückel's aromaticity rule, in particular a compound comprising a phenyl group. It may be substituted by one or more groups as defined for the term « aliphatic ». It may comprise one or more bonds as defined for the term « aliphatic ».

The term « saturated » means a compound that does not comprise any double or triple carbon-carbon bonds.

The term « unsaturated » means a compound that comprises a double or triple carbon-carbon bond, in particular a double carbon-carbon bond.

The term « optionally substituted » means a compound substituted by one or more groups selected from halogen, hydroxyl, thiol, alkyl, alkenyl, cycloalkyl, heterocycloalkyl, aryl, heteroaryl, alkoxy, aryloxy, thioalkyl, thioaryl, alkaryl, aralkyl, haloalkyl, perfluoroalkyl, alkylamino, alkylthiol, hydroxyalkyl, -CN, NOz, -NRₐR_{b}, -C(=O)-Rₐ, -C(=O)-ORₐ, -C(=O)-NRₐR_{b}, -NRₐ-C(=O)-R_{b}, -O-C(=O)-NRₐR_{b}, -NRₐ-C(=O)-O-R_{b} and -SO₂-NRₐR_{b}, wherein each Rₐ and R_{b} independently H, alkyl, aryl or aralkyl.

The term « polyol » means a compound comprising at least two hydroxyl groups.

The term « polyester » means a compound comprising at least two ester bonds.

The term « polyether » means a compound comprising at least two ether bonds.

The term « polycarbonate » means a compound comprising at least two carbonate bonds.

The term « 3D article » means a three-dimensional object obtained by 3D printing.

### Cationically polymerizable component

The curable composition of the present invention comprises a cationically polymerizable component, also referred to as component a).

A cationically polymerizable component is a component comprising at least one cationically polymerizable compound. A cationically polymerizable component may comprise a mixture of cationically polymerizable compounds.

As used herein, a cationically polymerizable compound refers to a compound comprising a polymerizing functional group which polymerizes via a cationic mechanism, for example a heterocyclic group or a carbon-carbon double bond substituted with an electrodonating group. In a cationic polymerization mechanism, a cationic photoinitiator forms a Brønsted or Lewis acid species that binds to the cationically polymerizable compound which then becomes reactive and leads to chain growth by reaction with another cationically polymerizable compound.

In particular, component a) may comprise at least one cationically polymerizable compound selected from an epoxide, an oxetane, an oxolane, a cyclic acetal, a cyclic lactone, a thiirane, a thietane, a spiro orthoester, a vinyl ether, and mixtures thereof.

In a preferred embodiment, component a) comprises at least one cationically polymerizable compound selected from an epoxide, an oxetane and mixtures thereof.

Suitable epoxides capable of being cationically polymerized are compounds comprising at least one epoxy group (preferably 2, 3 or 4 epoxy groups) selected from a glycidyl ether group, a glycidyl ester group, a cycloaliphatic epoxy group, an epoxy group obtained by the epoxidation of a carbon-carbon double bond and combinations thereof. Preferred epoxides comprise at least one cycloaliphatic epoxy group.

Examples of suitable epoxides include 2-Ethylhexyl cyclohexene carboxylate epoxide, Epoxidized C-10 Alpha Olefin, 1,2-epoxypentane, 1,2-epoxyhexane, 1,2-epoxyheptane, 1,2-epoxyoctane, 1,2-epoxydecane, 1,2-epoxydodecane, 1,2-epoxytetradecane, 1,2-epoxyhexadecane, 1,2-epoxyoctadecane, 1,2-epoxyeïcosane, 1,2-epoxycyclohexane, a glycidyl ether of a C4-C26 aliphatic or aromatic monoalcohol (in particular ethanol glycidyl ether, isopropanol glycidyl ether, butan-1-ol glycidyl ether, tert-butanol glycidyl ether, 2-ethylhexanol glycidyl ether, dodecan-1-ol glycidyl ether, phenol glycidyl ether, cresol glycidyl ether, 2-methoxyphenol glycidyl ether, p-nonylphenol glycidyl ether, 4-tert-butylphenol glycidyl ether, benzyl alcohol glycidyl ether, cardanol glycidyl ether such as Cardolite Ultra LITE 513 commercialized by Cardolite), a glycidyl ester of a C4-C26 aliphatic or aromatic monocarboxylic acid (in particular 4-tert-butylbenzoic acid glycidyl ester, oleic acid glycidyl ester, linolenic acid glycidyl ester, palmitic acid glycidyl ester, stearic acid glycidyl ester, neodecanoic or versatic acid glycidyl ester such as Cardura E10P commercialized by Hexion), methyl 9,10-epoxystearate, ethyl 9,10-epoxystearate, butyl 9,10-epoxystearate, 2-ethylhexyl 9,10-epoxystearate, n-octyl 9,10-epoxystearate, diglycidyl ether, 1,2,3,4-diepoxybutane, 1,2,4,5-diepoxypentane, 1,2,5,6-diepoxyhexane, 1,2,7,8-diepoxyoctane, 1,2,9,10-diepoxydecane, ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-hexanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a polyethylene glycol) diglycidyl ether, a polypropylene glycol) diglycidyl ether, a poly(trimethylene glycol) diglycidyl ether, a poly(tetramethylene glycol) diglycidyl ether, a polyethylene glycol-co-propylene glycol) diglycidyl ether, glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, diglycidyl cyclohexanedicarboxylate, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether, cardol diglycidyl ether, phloroglucinol triglycidyl ether, pyrogallol triglycidyl ether, tris(hydroxyphenyl)methane triglycidyl ether, tris(hydroxyphenyl)ethane triglycidyl ether, bisphenol A, B, F or S diglycidyl ether, hydrogenated bisphenol A, B, F or S diglycidyl ether, an epoxy novolak resin, diglycidyl phthalate, diglycidyl terephthalate, diglycidyl isophthalate, 4-epoxycyclohexylmethyl-3',4'-epoxycyclohexanecarboxylate (UviCure S105), bis((3,4-epoxycyclohexyl)methyl) adipate (UviCure S128), 2-(3,4-epoxycyclohexyl-5,5-spiro-3,4-epoxy)cyclohexane-1,4-dioxane, bis(3,4-epoxy-6-methylcyclohexylmethyl)adipate, 3,4-epoxy-6-methylcyclohexyl-3',4'-epoxy-6'-methylcyclohexanecarboxylate, vinylcyclohexene oxide, 4-vinylepoxycyclohexane, 4-vinylcyclohexene dioxide, bis(3,4-epoxy-6-methylcyclohexylmethyl)adipate, methylenebis(3,4-epoxycyclohexane), dicyclopentadiene diepoxide, di(3,4-epoxycyclohexylmethyl) ether of ethylene glycol, ethylenebis(3,4-epoxycyclohexanecarboxylate), epoxyhexahydrodioctylphthalate, epoxyhexahydro-di-2-ethylhexyl phthalate, epoxyoctylstearic acid, an epoxidized vegetable oil (such as epoxidized soybean oil and epoxidized linseed oil), epoxidized polybutadiene; triglycidyl isocyanurate, an epoxy-functionalized polyorganosiloxane, and combinations thereof.

A preferred cycloaliphatic epoxide is Uvicure^{®} S105 which is available from Arkema and has the following formula:

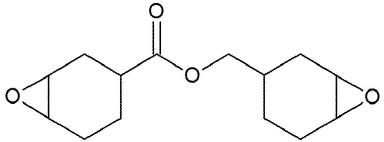

Other cycloaliphatic epoxides which may be used in this invention are those having the following formula (I): 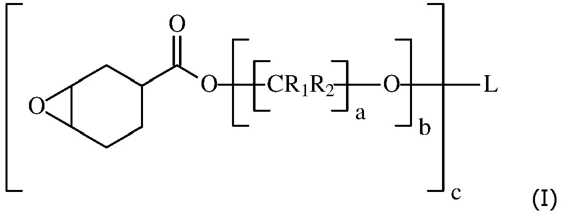 wherein
each R₁ and R₂ is independently selected from H and Me;
L is the residue of a polyol;
each a is independently from 2 to 4;
each b is independently 0 to 20 with the proviso that at least one b is not 0;
c is at least 3.

In particular, c may be 3, 4, 5, 6, 7, 8, 9 or 10. In one embodiment, c may be equal to 3. In another embodiment c may be higher than 3, for example c may be from 4 to 10. Illustrative examples of a cycloaliphatic epoxide of formula (I) have the following structure:

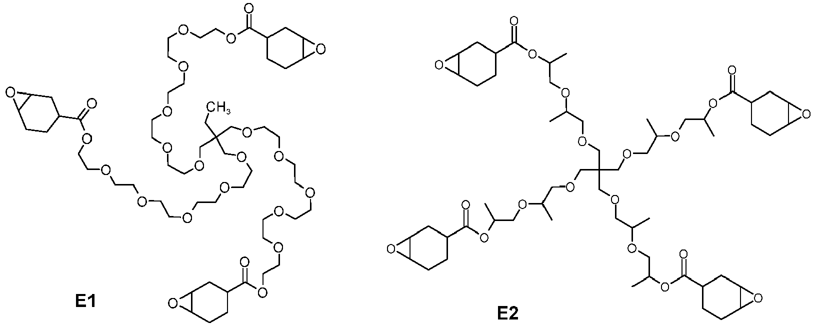

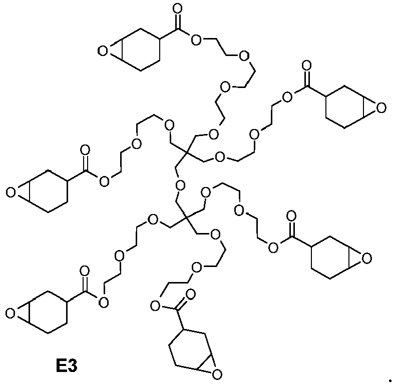

Other examples of cycloaliphatic epoxides of formula (I) are those according to the following formula (Ia): 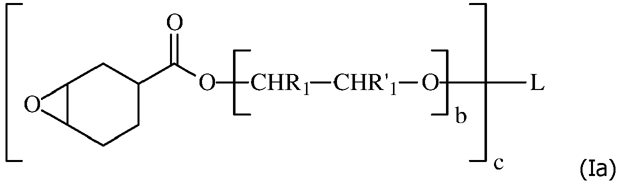 wherein
L, b and c are as defined above;
each R₁ and R'₁ is independently selected from H and Me.

Another type of cycloaliphatic epoxides are those wherein a is 4 and R₁ and R₂ are both H. Preferably, at least one of the following conditions are met:
- each b is independently from 1 to 20, in particular from 1 to 10, more particularly from 2 to 6,
- c is from 3 to 10,
- L is a trivalent linker according to the following formula (II): 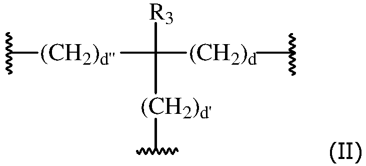
wherein
R₃ is selected from H, alkyl and alkoxy, in particular R₃ is alkyl, more particularly R₃ is ethyl; d, d' and d" are independently 0 to 2 with the proviso that at least 2 among d, d' and d" are not 0, in particular d, d' and d" are all 1 or d is 0 and d' and d" are 1.

In other preferred cycloaliphatic epoxides, c is 4 and L is a tetravalent linker according to one of the following formulae (IIIa), (IIIb) or (IIIc): 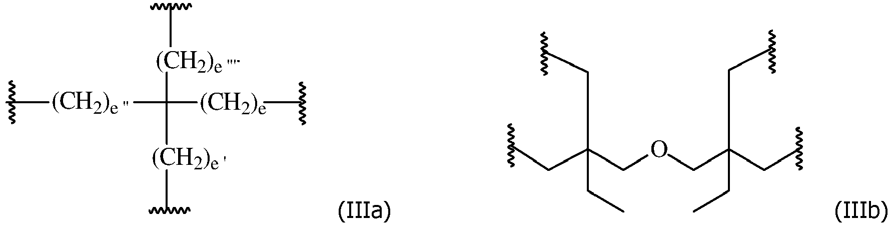 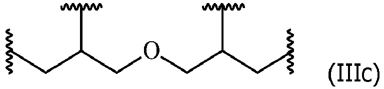 wherein
e, e', e" and e‴ are independently 0 to 2 with the proviso that at least 3 among e, e', e" and e‴ are not 0, in particular e, e', e" and e‴ are all 1, or
L is a pentavalent linker according to the following formula (IV): 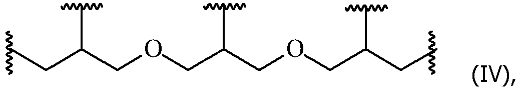 or
L is a hexavalent linker according to the following formula (Va), (Vb) or (Vc): 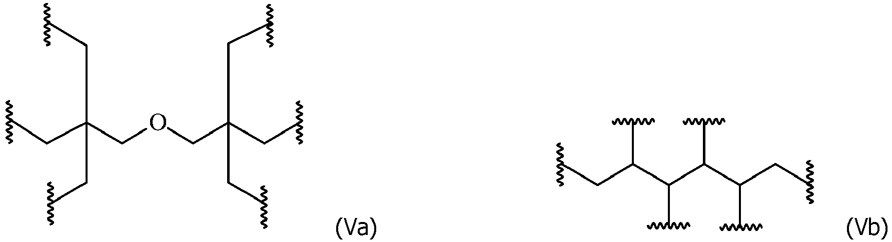 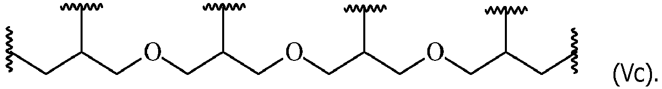
Suitable oxetanes capable of being cationically polymerized include trimethylene oxide, 3,3-dimethyloxetane, 3,3-dichloromethyloxetane, 3-ethyl-3-phenoxymethyloxetane, and bis(3-ethyl-3-methyloxy)butane, 3-ethyl-3-oxetanemethanol.

In a preferred embodiment, the oxetane has the following formula (VI): 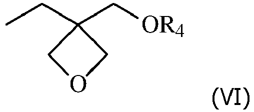
wherein R₄ is selected from H, alkyl, aryl, alkylaryl, (meth)acryloyl, -CH₂-oxetanyl-CH₂-CH₃, -L₁-O-CH₂-oxetanyl-CH₂-CH₃;
L₁ is a divalent linker, in particular-CH₂-Ph-Ph-CH₂- or -CH₂-Ph-CH₂-[O-CH₂-Ph-CH₂]_{f}-
Ph is phenylene;
f is 0 to 10.

In particular, the oxetane may have formula (VI) wherein R₄ is H, benzyl or -CH₂-oxetanyl-CH₂-CH₃; preferably R₄ is H or -CH₂-oxetanyl-CH₂-CH₃.

Suitable oxolanes capable of being cationically polymerized include tetrahydrofuran and 2,3-dimethyltetrahydrofuran.

Suitable cyclic acetals capable of being cationically polymerized include trioxane, 1,3-dioxolane, and 1,3,6-trioxacyclooctane.

Suitable cyclic lactones capable of being cationically polymerized include β-propiolactone and ε-caprolactone.

Suitable thiiranes capable of being cationically polymerized include ethylene sulfide, 1,2-propylene sulfide, and thioepichlorohydrin.

Suitable thietanes capable of being cationically polymerized include 3,3-dimethylthietane.

Suitable spiro orthoesters capable of being cationically polymerized are compounds obtained by the reaction of an epoxy compound and a lactone.

Suitable vinyl ethers are aromatic, aliphatic or cycloaliphatic vinyl ethers and also silicon-containing vinyl ethers. These are compounds having at least one, preferably at least two, vinyl ether groups in the molecule. Examples of vinyl ethers suitable for use in the compositions according to the invention include triethylene glycol divinyl ether, 1,4-cyclohexanedimethanol divinyl ether, 4-hydroxybutyl vinyl ether, the propenyl ether of propylene carbonate, dodecyl vinyl ether, tert-butyl vinyl ether, tert-amyl vinyl ether, cyclohexyl vinyl ether, 2-ethylhexyl vinyl ether, ethylene glycol monovinyl ether, butanediol monovinyl ether, hexanediol monovinyl ether, 1,4-cyclohexanedimethanol mono-vinyl ether, diethylene glycol monovinyl ether, ethylene glycol divinyl ether, ethylene glycol butylvinyl ether, butane-1,4-diol divinyl ether, hexanediol divinyl ether, diethylene glycol divinyl ether, triethylene glycol divinyl ether, triethylene glycol methylvinyl ether, tetra-ethylene glycol divinyl ether, pluriol-E-200 divinyl ether, polytetrahydrofuran divinyl ether-290, trimethylolpropane trivinyl ether, dipropylene glycol divinyl ether, octadecyl vinyl ether, (4-cyclohexyl-methyleneoxyethene)-glutaric acid methyl ester and (4-butoxyethene)-iso-phthalic acid ester. Preferred vinyl ethers are ethylene glycol divinyl ether, triethylene glycol divinyl ether and trimethylolpropane trivinyl ether.

In a preferred embodiment, component a) comprises a mixture of at least one cycloaliphatic epoxide and at least one oxetane. Oxetanes may serve as reactive diluents and provide high curing speed and also high solvent resistance in compositions with alkoxylated cycloaliphatic epoxides. The weight ratio between the oxetane and the cycloaliphatic epoxide may range from 20:80 to 80:20, in particular from 30:70 to 70:30, more particularly from 40:60 to 60:40.

The curable composition of the invention may comprise 10 to 99%, in particular 15 to 98%, by weight of component a) based on the total weight of the curable composition.

### Cationic photoinitiator component

The curable composition of the present invention further includes a cationic photoinitiator component, also referred to as component b).

A cationic photoinitiator component is a component comprising at least one cationic photoinitiator. A cationic photoinitiator component may comprise a mixture of cationic photoinitiators.

As used herein, a cationic photoinitiator refers to a compound that is capable of initiating a cationic polymerization reaction by generating a Brønsted or Lewis acid species after exposure to a suitable light source.

Component b) comprises at least one iodonium salt.

Component b) may comprise at least one iodonium salt selected from diphenyliodonium triflate, diphenyliodonium pyrenesulfonate, diphenyliodonium dodecylphenylsulfonate, diphenyliodonium hexafluoroantimonate, bis-(4-t-butylphenyl)-iodonium hexafluorophosphate, bis-(4-t-butylphenyl)-iodonium chloride, bis(4-t-butylphenyl) iodonium tetraphenylborate, bis(4-t-butylphenyl) iodonium tosylate, bis-(4-t-butylphenyl)-iodonium hexafluoroantimonate, bis(4-t-butylphenyl) iodonium pentafluorophenylborate, bis-(4-t-butylphenyl)-iodonium triflate, bis-(4-t-butylphenyl)-iodonium bis(trifluoromethane)sulfonimide, [4-(2-hydroxy-1- tetradecyloxy)-phenyl]phenyliodonium hexafluoroantimonate, [4-(2-hydroxy-1- tetradecyloxy)-phenyl]phenyliodonium hexafluorophosphate, 4-isopropyl-4'-methyldiphenyliodonium tetrakis(pentafluorophenyl)borate, preferably bis-(4-t-butylphenyl)-iodonium hexafluorophosphate.

The curable composition may comprise from 0.01 to 10%, from 0.1 to 9%, from 0.2 to 8%, from 0.5 to 7% or from 1 to 6%, by weight of component b) based on the total weight of the curable composition.

### Photosensitizer component

The curable composition of the present invention further includes a photosensitizer component, also referred to as component c).

A photosensitizer component is a component comprising at least one photosensitizer. A photosensitizer component may comprise a mixture of photosensitizers.

As used herein, a photosensitizer refers to a compound a compound that, upon irradiation with light, transfers energy to another compound of the curable composition and returns to its initial state. A photosensitizer may be chemically unchanged after the polymerization as it has not reacted with other chemical species. In particular, the photosensitizer may improve the photoinitiating activity of the cationic photoinitiator and/or the free-radical photoinitiator. Component c) comprises at least one multifunctional halogenated thioxanthone. The multifunctional thioxanthone may have at least two thioxanthone units, preferably at least three thioxanthone units, more preferably at least four thioxanthone units. Preferably, the multifunctional thioxanthone has up to six thioxanthone units. The multifunctional thioxanthone is halogenated, preferably the multifunctional thioxanthone is chlorinated. In a preferred embodiment, each thioxanthone unit bears at least one halogen atom, in particular each thioxanthone unit bears a single chlorine atom.

The multifunctional halogenated thioxanthone may correspond to the following formula (VII): 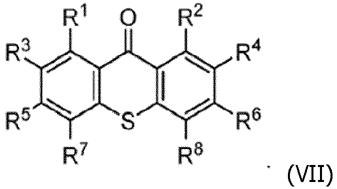 wherein
R¹, R², R³, R⁴, R⁵, R⁶, R⁷ and R⁸ are independently selected from hydrogen, halogen, hydroxyl, thiol, alkyl, alkenyl, cycloalkyl, heterocycloalkyl, aryl, heteroaryl, alkoxy, aryloxy, thioalkyl, thioaryl, alkaryl, aralkyl, haloalkyl, perfluoroalkyl, alkylamino, alkylthiol, hydroxyalkyl, -CN, NO₂, -NRₐR_{b}, -C(=O)-Rₐ, -C(=O)-ORₐ, -C(=O)-NRₐR_{b}, -NRₐ-C(=O)-R_{b}, -O-C(=O)-NRₐR_{b}, -NRₐ-C(=O)-O-R_{b}, -SO₂-NRₐR_{b} and a moiety bearing at least two thioxanthone units, with the proviso that one of R¹, R², R³, R⁴, R⁵, R⁶, R⁷ and R⁸ is a moiety bearing at least one thioxanthone unit and at least one of R¹, R², R³, R⁴, R⁵, R⁶, R⁷ and R⁸ is halogen, preferably one of R¹, R², R³, R⁴, R⁵, R⁶, R⁷ and R⁸ is chlorine;
each Rₐ and R_{b} is independently H, alkyl, aryl or aralkyl.

More preferably, R¹, R³, R⁵ and R⁷ are hydrogen, and R², R⁴, R⁶ and R⁸ are independently hydrogen, halogen or a moiety bearing at least one thioxanthone unit, with the proviso that one of R², R⁴, R⁶ and R⁸ is a moiety bearing at least one thioxanthone unit and one of R², R⁴, R⁶ and R⁸ is halogen, preferably chlorine.

In a preferred embodiment, R² is halogen, preferably chlorine, R¹, R³, R⁴, R⁵, R⁶ and R⁷ are hydrogen and R⁸ is a moiety bearing at least one thioxanthone unit.

The thioxanthone units may be the same or different but preferably they are the same. The multifunctional thioxanthone may correspond to the following general formula (VIII): 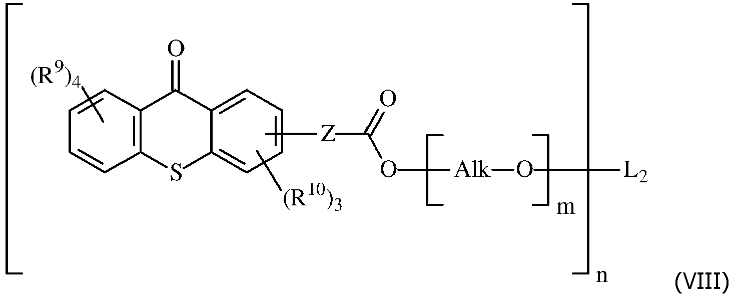 wherein
each R⁹ and each R¹⁰ is independently selected from hydrogen, halogen, hydroxyl, thiol, alkyl, alkenyl, cycloalkyl, heterocycloalkyl, aryl, heteroaryl, alkoxy, aryloxy, thioalkyl, thioaryl, alkaryl, aralkyl, haloalkyl, perfluoroalkyl, alkylamino, alkylthiol, hydroxyalkyl, -CN, NO₂, -NRₐR_{b}, -C(=O)-Rₐ, -C(=O)-ORₐ, -C(=O)-NRₐR_{b}, -NRₐ-C(=O)-R_{b}, -O-C(=O)-NRₐR_{b}, -NRₐ-C(=O)-O-R_{b} and -SO₂-NRₐR_{b}, wherein each Rₐ and R_{b} is independently H, alkyl, aryl or aralkyl with the proviso that one of R¹⁰ is halogen, preferably chlorine;
each Z is independently selected from direct bond, alkylene, oxyalkylene, thioalkylene, ketoalkylene and aminoalkylene;
each Alk is independently an alkylene;
each m is independently an integer from 0 to 20;
n is an integer higher than 2;
L₂ is a n-valent linker.

In formula (VIII), each R⁹ and each R¹⁰ is independently selected from hydrogen, halogen, alkyl, haloalkyl, perfluoroalkyl, cycloalkyl, heterocycloalkyl, alkoxy, aryloxy, thioalkyl, thioaryl, alkenyl, aryl, aralkyl, alkaryl, heteroaryl, -C(=O)Rₐ, -NR_{b}R_{c}, alkylamino, alkylthiol, haloalkyl, - NO₂, -CN, -C(=O)OR_{d,} -O-C(=O)R_{d} and -C(=O)NR_{b}R_{c}, wherein Rₐ, R_{b}, R_{c} and R_{d} are as defined above with the proviso that one of R¹⁰ is halogen, preferably chlorine. In particular, each R⁹ and each R¹⁰ is independently selected from hydrogen, halogen and alkyl with the proviso that one of R¹⁰ is halogen, preferably chlorine. More particularly, each R⁹ is hydrogen and each R¹⁰ is independently selected from hydrogen, halogen and alkyl with the proviso that one of R¹⁰ is halogen, preferably chlorine. Even more particularly, each R⁹ is hydrogen and each R¹⁰ is independently selected from hydrogen and chlorine with the proviso that one of R¹⁰ is chlorine.

In formula (VIII), each Z is independently selected from direct bond, alkylene, oxyalkylene, thioalkylene and ketoalkylene. In particular each Z is independently selected from direct bond, alkylene of formula (Z1), oxyalkylene of formula (Z2), thioalkylene of formula (Z3), ketoalkylene of formula (Z4) and aminoalkylene of formula (Z5):

*-(CR¹¹R¹²)ₚ-# (Z1)

*-O-(CR¹³R¹⁴)_{q}-# (Z2)

*-S-(CR¹⁵R¹⁶)ᵣ-# (Z3)

*-C(=O)-(CR¹⁷R¹⁸)ₛ-# (Z4)

*-NR¹⁹-(CR²⁰R²¹)ₜ-# (Z5)

wherein
each R¹¹, R¹², R¹³, R¹⁴, R¹⁵, R¹⁶, R¹⁷, R¹⁸, R²⁰ and R²¹ is independently H or alkyl, in particular H;
R¹⁹, is H, alkyl or aryl;
each p, q, r, s and t is independently an integer from 1 to 6, in particular 1 or 2;
the symbol * represents a point of attachment to the thioxanthone moiety;
the symbol # represents a point of attachment to a -C(=O)-O-[Alk-O]ₘ-L₂ moiety.

In formula (VIII), each Alk is independently an alkylene. In particular, each Alk may independently be an alkylene having 2 to 4 carbon atoms. Nonlimiting examples of alkylene include ethylene (i.e. -CH₂-CH₂-), propylene (i.e. -CHCH₃-CH₂-) and butylene (i.e. -CH₂-CH₂-CH₂-CH₂-).

In formula (VIII), each m is independently an integer from 0 to 20. In particular, each m may independently an integer from 1 to 15, more particularly from 2 to 10.

In formula (VIII), n is an integer higher than 2. In particular, n may be from 3 to 6, more particularly from 4 to 6.

In formula (VIII), L₂ is a n-valent linker. In particular, L₂ may be selected from:
- a trivalent linker according to formula (II) as defined above;
- a tetravalent linker according to formulae (IIIa), (IIIb) or (IIIc) as defined above;
- a pentavalent linker according to formula (IV) as defined above;
- a hexavalent linker according to formula (Va), (Vb) or (Vc) as defined above.

More particularly, L₂ may correspond to the residue of a polyol (without the hydroxy groups). Nonlimiting examples of polyols include glycerol, di-, tri- or tetraglycerol, trimethylolmethane, trimethylolethane, trimethylolpropane, di(trimethylolpropane), pentaerythritol, di(pentaerythritol), an alditol (i.e. erythritol, threitol, arabitol, xylitol, ribitol, mannitol, sorbitol, galactitol, fucitol or iditol), tris(2-hydroxyethyl)isocyanurate. Preferred polyols include di-, tri- or tetraglycerol, di(trimethylolpropane), pentaerythritol, di(pentaerythritol) and sorbitol. A particularly preferred polyol is pentaerythritol.

Preferably, the multifunctional thioxanthone has a molecular weight of more than 500 g/mol, more preferably more than 600 g/mol and most preferably more than 700 g/mol. Preferably, the multifunctional thioxanthone has a molecular weight of less than 2000 g/mol, more preferably less than 1500 g/mol and most preferably less than 1000 g/mol. In a preferred embodiment, the multifunctional thioxanthone has a molecular weight of more than 500 g/mol to less than 2000 g/mol, more preferably more than 600 g/mol to less than 2000 g/mol and most preferably more than 700 g/mol to less than 2000 g/mol. Molecular weights (number average) can be calculated if the structure of the multifunctional thioxanthone is known or molecular weights can be measured using gel permeation chromatography using polystyrene standards.

A particularly preferred multifunctional halogenated thioxanthone is Speedcure^{®} 7010 from Arkema.

Speedcure 7010^{®} has the following chemical structure: 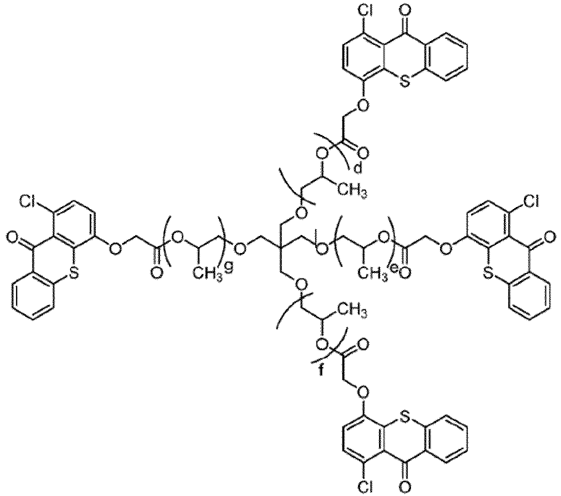 wherein d + e + f + g is an integer from 1 to 20, for instance from 1 to 15.

Speedcure^{®} 7010 is known by the chemical name of 1,3-di({α-[1-chloro-9-oxo-9H-thioxanthen-4-yl)oxy]acetylpoly[oxy(1-methylethylene)]} oxy)-2,2-bis({α-[1-chloro-9-oxo-9H-thioxanthen-4-yl)oxy]acetylpoly[oxy(1-methylethylene)]}oxymethyl) propane.

The concentration of component c) in the curable composition will vary depending on the type of component b) that is used. Typically, however, the curable composition is formulated to comprise from 0.05% to 5%, in particular 0.1% to 3%, more particularly 0.5 to 2%, by weight of component c) based on the total weight of the curable composition.

### (Meth)acrvlate-functionalized component

The curable composition of this invention may be one that is cured by both free-radical polymerization and cationic polymerization. The curable composition may thus further comprise a (meth)acrylate-functionalized component, also referred to component d).

A (meth)acrylate-functionalized component is a component comprising at least one (meth)acrylate-functionalized compound. A (meth)acrylate-functionalized component may comprise a mixture of (meth)acrylate-functionalized compounds.

As used herein, the term "(meth)acrylate-functionalized compound" means a compound comprising a (meth)acrylate group. The term "(meth)acrylate group" encompasses acrylate groups (-O-CO-CH=CH₂) and methacrylate groups (-O-CO-C(CH₃)=CH₂). The term "(meth)acrylate-functionalized compound" here encompasses compounds containing more than one (meth)acrylate group, such as 2, 3, 4, 5 or 6 (meth)acrylate groups.

Component d) may comprise at least one (meth)acrylate-functionalized compound selected from a (meth)acrylate-functionalized monomer, a (meth)acrylate-functionalized oligomer and mixtures thereof. In particular, compound d) comprises a (meth)acrylate functionalized monomer and optionally a (meth)acrylate-functionalized oligomer.

According to some embodiments, component d) comprises a (meth)acrylate-functionalized monomer. Component d) may comprise a mixture of (meth)acrylate-functionalized monomers.

The (meth)acrylate-functionalized monomer may have a molecular weight of less than 600 g/mol, in particular from 100 to 550 g/mol, more particularly 200 to 500 g/mol.

The (meth)acrylate-functionalized monomer may have 1 to 6 (meth)acrylate groups, in particular 1 to 5 (meth)acrylate groups, more particularly 1 to 3 (meth)acrylate groups. The (meth)acrylate-functionalized monomer may comprise a mixture of (meth)acrylate-functionalized monomers having different functionalities. For example, the (meth)acrylate-functionalized monomer may comprise a mixture of a (meth)acrylate-functionalized monomer containing a single (meth)acrylate group per molecule (referred to herein as "mono(meth)acrylate-functionalized compounds") and a (meth)acrylate-functionalized monomer containing 2 or more, preferably 2 or 3, (meth)acrylate groups per molecule.

In one embodiment, the (meth)acrylate functionalized monomer comprises a mono(meth)acrylate-functionalized monomer. The mono(meth)acrylate-functionalized monomer may advantageously function as a reactive diluent and reduce the viscosity of the composition.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in component d): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof. In one embodiment, the (meth)acrylate functionalized monomer may comprise a (meth)acrylate-functionalized monomer containing two or more (meth)acrylate groups per molecule.

Examples of suitable (meth)acrylate-functionalized monomers containing two or more (meth)acrylate groups per molecule include (meth)acrylate esters of polyols. Such polyols may be fully or partially esterified (i.e. with (meth)acrylic acid, (meth)acrylic anhydride, (meth)acryloyl chloride or the like), provided they contain at least two (meth)acrylate functional groups per molecule.

Exemplary (meth)acrylate-functionalized monomers containing two or more (meth)acryloyloxy groups per molecule may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cycloheoane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof.

Component d) may comprise 0 to 100%, in particular 5 to 99%, more particularly 10 to 95%, even more particularly 15 to 90%, more particularly still 20 to 85% by weight of (meth)acrylate-functionalized monomer based on the total weight of the component d). In particular, component d) may comprise 0 to 50% or 5 to 50% or 10 to 50% or 15 to 50% or 20 to 50% or 25 to 50%, by weight of (meth)acrylate-functionalized monomer based on the total weight of component d). Alternatively, component d) may comprise 50 to 100% or 55 to 100% or 60 to 100% or 65 to 100% or 70 to 100%, by weight of (meth)acrylate-functionalized monomer based on the total weight of component d).

In one embodiment, the component d) comprises a (meth)acrylate-functionalized oligomer. Component d) may comprise a mixture of (meth)acrylate-functionalized oligomers.

The (meth)acrylate-functionalized oligomer may be selected in order to enhance the flexibility, strength and/or modulus, among other attributes, of a cured polymer prepared using the curable composition of the invention.

The (meth)acrylate functionalized oligomer may have 1 to 18 (meth)acrylate groups, in particular 2 to 6 (meth)acrylate groups, more particularly 2 to 6 acrylate groups.

The (meth)acrylate functionalized oligomer may have a number average molecular weight equal or more than 600 g/mol, in particular 800 to 15,000 g/mol, more particularly 1,000 to 5,000 g/mol.

In particular, the (meth)acrylate-functionalized oligomers may be selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), and (meth)acrylate-functionalized polyester oligomers (sometimes also referred to as "polyester (meth)acrylate oligomers") and mixtures thereof.

Component d) may comprise 0 to 100%, in particular 5 to 99%, more particularly 10 to 95%, even more particularly 15 to 90%, more particularly still 20 to 85% by weight of (meth)acrylate-functionalized oligomer based on the total weight of the component d). In particular, component d) may comprise 0 to 50% or 5 to 50% or 10 to 50% or 15 to 50% or 20 to 50% or 25 to 50%, by weight of (meth)acrylate-functionalized oligomer based on the total weight of component d). Alternatively, component d) may comprise 50 to 100% or 55 to 100% or 60 to 100% or 65 to 100% or 70 to 100%, by weight of (meth)acrylate-functionalized oligomer based on the total weight of component d).

The curable composition of the invention may comprise 0 to 80%, in particular 5 to 75%, more particularly 10 to 70%, by weight of component d) based on the total weight of the curable composition.

### Free-radical photoinitiator component

When the curable composition comprises component d), a free-radical photoinitiator component may also be present. The curable composition may thus further comprise a free-radical photoinitiator component, also referred to component e).

A free-radical photoinitiator component is a component comprising at least one free-radical photoinitiator. A free-radical photoinitiator component may comprise a mixture of free-radical photoinitiators.

Non-limiting types of free-radical photoinitiators suitable for use in the curable compositions of the present invention include, for example, benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones (other than the multifunctional halogenated thioxanthones of component c)), xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable free-radical photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In preferred compositions of the invention, a radical photoinitiator having Norrish type I activity may be used, such as a phosphine oxide or an acetophenone.

The curable composition of the invention may comprise 0 to 20%, in particular 1 to 15%, more particularly 2 to 10%, by weight of component e) based on the total weight of the curable composition.

### Additives

The curable composition of the present invention may comprise one or more additives.

In particular, the additives may be selected from antioxidants/photostabilizers, light blockers/absorbers, polymerization inhibitors, foam inhibitors, flow or leveling agents, colorants, pigments, dispersants (wetting agents, surfactants), slip additives, fillers, chain transfer agents, thixotropic agents, matting agents, impact modifiers, waxes, mixtures thereof, and any other additives conventionally used in the coating, sealant, adhesive, molding, 3D printing or ink arts.

The curable composition may comprise a chain-transfer agent.

Chain-transfer agents may be introduced in the curable composition of the present invention in order to increase the curing speed. In particular, the chain-transfer agent may be a polyol. Polythiols or polyamines may slow down cationic cure and are not a preferred choice in the present invention.

The curable composition may comprise a stabilizer.

Stabilizers may be introduced in the curable composition of the present invention in order to provide adequate storage stability and shelf life. Advantageously, one or more such stabilizers are present at each stage of the method used to prepare the curable composition, to protect against unwanted reactions during processing of any ethylenically unsaturated components of the curable composition. As used herein, the term "stabilizer" means a compound or substance which retards or prevents reaction or curing of actinically-curable functional groups present in a composition in the absence of actinic radiation. However, it will be advantageous to select an amount and type of stabilizer such that the composition remains capable of being cured when exposed to actinic radiation (that is, the stabilizer does not prevent radiation curing of the composition). Typically, effective stabilizers for purposes of the present invention will be classified as free radical stabilizers (i.e., stabilizers which function by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized. Other stabilizers known in the art such as BHT and derivatives, phosphite compounds, phenothiazine (PTZ), triphenyl antimony and tin(II) salts can also be used.

The concentration of stabilizer in the curable composition will vary depending upon the particular stabilizer or combination of stabilizers selected for use and also on the degree of stabilization desired and the susceptibility of components in the curable compositions towards degradation in the absence of stabilizer. Typically, however, the curable composition is formulated to comprise from 5 to 5000 ppm stabilizer. According to certain embodiments of the invention, the reaction mixture during each stage of the method employed to make the curable composition contains at least some stabilizer, e.g., at least 10 ppm stabilizer.

The curable composition may comprise a light blocker (sometimes referred to as a light absorber).

The introduction of a light blocker is particularly advantageous when the curable composition is to be used as a resin in a three-dimensional printing process involving photocuring of the curable composition. The light blocker may be any such substances known in the three-dimensional printing art, including for example non-reactive pigments and dyes. The light blocker may be a visible light blocker or a UV light blocker, for example. Examples of suitable light blockers include, but are not limited to, titanium dioxide, carbon black and organic ultraviolet light absorbers such as hydroxybenzophenone, hydroxyphenylbenzotriazole, oxanilide, hydroxyphenyltriazine, Sudan I, bromothymol blue, 2,2'-(2,5-thiophenediyl)bis(5-tert-butylbenzoxazole) (sold under the brand name "Benetex OB Plus") and benzotriazole ultraviolet light absorbers.

The amount of light blocker may be varied as may be desired or appropriate for particular applications. Generally speaking, if the curable composition contains a light blocker, it is present in a concentration of from 0.001 to 10 % by weight based on the weight of the curable composition.

Advantageously, the curable compositions of the present invention may be formulated to be solvent-free, i.e., free of any non-reactive volatile substances (substances having a boiling point at atmospheric pressure of 150°C or less). For example, the curable compositions of the present invention may contain little or no non-reactive solvent, e.g., less than 10% or less than 5% or less than 1% or even 0% non-reactive solvent, based on the total weight of the curable composition. As used herein, the term non-reactive solvent means a solvent that does not react when exposed to the actinic radiation used to cure the curable compositions described herein.

According to other advantageous embodiments of the invention, the curable composition is formulated to be useable as a one component or one part system. That is, the curable composition is cured directly and is not combined with another component or second part prior to being cured.

### Curable Composition

In preferred embodiments of the invention, the curable composition is a liquid at 25°C. In various embodiments of the invention, the curable compositions described herein are formulated to have a viscosity of less than 10,000 mPa.s (cP), or less than 5,000 mPa.s (cP), or less than 4,000 mPa.s (cP), or less than 3,000 mPa.s (cP), or less than 2,500 mPa.s (cP), or less than 2,000 mPa.s (cP), or less than 1,500 mPa.s (cP), or less than 1,000 mPa.s (cP) or even less than 500 mPa.s (cP) as measured at 25°C using a Brookfield viscometer, model DV-II, using a 27 spindle (with the spindle speed varying typically between 20 and 200 rpm, depending on viscosity). In advantageous embodiments of the invention, the viscosity of the curable composition is from 200 to 5,000 mPa.s (cP), or from 200 to 2,000 mPa.s (cP), or from 200 to 1,500 mPa.s (cP), or from 200 to 1,000 mPa.s (cP) at 25°C. Relatively high viscosities can provide satisfactory performance in applications where the curable composition is heated above 25°C, such as in three-dimensional printing operations or the like which employ machines having heated resin vats.

The curable compositions described herein are to be subject to curing by means of cationic polymerization and optionally free radical polymerization or other types of polymerization. In particular embodiments, the curable compositions are photocured (i.e., cured by exposure to actinic radiation such as light, in particular visible or UV light).

The curable composition of the invention may be an ink, coating, sealant, adhesive, molding, or 3D printing composition.

End use applications for the curable compositions include, but are not limited to, inks, coatings, adhesives, additive manufacturing resins (such as 3D printing resins), molding resins, sealants, composites, antistatic layers, electronic applications, recyclable materials, smart materials capable of detecting and responding to stimuli, packaging materials, personal care articles, articles for use in agriculture, water or food processing, or animal husbandry, and biomedical materials. The curable compositions of the invention thus find utility in the production of biocompatible articles. Such articles may, for example, exhibit high biocompatibility, low cytotoxicity and/or low extractables.

The composition according to the invention may in particular be used to obtain a cured product, a 3D printed article according to the following processes.

### Process for the preparation of a cured product

The process for the preparation of a cured product according to the invention comprises curing the composition of the invention. In particular, the composition may be cured by exposing the composition to radiation, more particularly by exposing the composition to UV, near-UV, visible, infrared and/or near-infrared radiation or to an electron beam.

Curing may be accelerated or facilitated by supplying energy to the curable composition, such as by heating the curable composition. Thus, the cured product may be deemed the reaction product of the curable composition, formed by curing. A curable composition may be partially cured by exposure to actinic radiation, with further curing being achieved by heating the partially cured article. For example, an article formed from the curable composition (e.g., a 3D printed article) may be heated at a temperature of from 40°C to 120°C for a period of time of from 5 minutes to 12 hours.

Prior to curing, the curable composition may be applied to a substrate surface in any known conventional manner, for example, by spraying, knife coating, roller coating, casting, drum coating, dipping, and the like and combinations thereof. Indirect application using a transfer process may also be used. A substrate may be any commercially relevant substrate, such as a high surface energy substrate or a low surface energy substrate, such as a metal substrate or plastic substrate, respectively. The substrates may comprise metal, paper, cardboard, glass, thermoplastics such as polyolefins, polycarbonate, acrylonitrile butadiene styrene (ABS), and blends thereof, composites, wood, leather and combinations thereof. When used as an adhesive, the curable composition may be placed between two substrates and then cured, the cured composition thereby bonding the substrates together to provide an adhered article. Curable compositions in accordance with the present invention may also be formed or cured in a bulk manner (e.g., the curable composition may be cast into a suitable mold and then cured).

A 3D-printed article may, in particular, be obtained with a process comprising printing a 3D article with the composition of the invention. In particular, the process may comprise printing a 3D article layer by layer or continuously.

A plurality of layers of a curable composition in accordance with the present invention may be applied to a substrate surface; the plurality of layers may be simultaneously cured (by exposure to a single dose of radiation, for example) or each layer may be successively cured before application of an additional layer of the curable composition.

The cured product and 3D-printed articles obtained with the processes of the invention are described herein after.

### Cured product

The cured product of the invention is obtained by curing the composition of the invention or according to the process of the invention.

The cured product may be an ink, a coating, a sealant, an adhesive, a molded article or a 3D-printed article.

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein.

In some embodiments, the invention herein can be construed as excluding any element or process step that does not materially affect the basic and novel characteristics of the invention. Additionally, in some embodiments, the invention can be construed as excluding any element or process step not specified herein.

Although the invention is illustrated and described herein with reference to specific embodiments, the invention is not intended to be limited to the details shown. Rather, various modifications may be made in the details within the scope and range of equivalents of the claims and without departing from the invention.

The invention is illustrated with the following non-limiting examples.

### Examples

### Materials

The following materials were used in the examples:

| **Name of compound and Supplier** | **Function** |
|---|---|
| Uvicure^{®} S105 from Arkema | Cycloaliphatic epoxide |
| Uvicure^{®} S130 from Arkema | Oxetane |
| Uvicure^{®} S140 from Arkema | Oxetane |
| Bisphenol A diglycidyl ether (BADGE) from Bitrez Ltd | Epoxide |
| Epoxidized Linseed Oil (ELSO) from HOBUM Oleochemicals GmbH | Epoxide |
| Curalite OxPlus (DOX) from Perstorp | Oxetane |
| SpeedCure^{®} 938 from Arkema | Iodonium salt |
| SpeedCure^{®} 939 from Arkema | Iodonium salt |
| SpeedCure^{®} ITX from Arkema | Monofunctional thioxanthone |
| SpeedCure^{®} DETX from Arkema | Monofunctional thioxanthone |
| SpeedCure^{®} CPTX from Arkema | Monofunctional thioxanthone |
| SpeedCure^{®} 7010 from Arkema | Tetrafunctional halogenated thioxanthone |
| Omnipol^{®} TX from IGM Resins | Difunctional thioxanthone |
| Genopol^{®} TX from Rahn AG | Difunctional thioxanthone |

### Example 1: Preparation and testing of curable compositions

Six formulations were prepared, which had the compositions provided in Table 1 below (the amounts are in % by weight based on the total weight of the composition).

**Table 1**

| | **22-1** | **22-2** | **22-3** | **22-4** | **22-5** | **22-6** |
|---|---|---|---|---|---|---|
| **Uvicure S105** | 72.5 | 72.5 | 72.5 | 72.5 | 72.5 | 72.5 |
| **Uvicure S130** | 25 | 25 | 25 | 25 | 25 | 25 |
| **Speedcure 938** | 2 | 2 | 2 | 2 | 2 | 2 |
| **Speedcure 2-ITX** | 0.5 | | | | | |
| **Speedcure DETX** | | 0.5 | | | | |
| **Speedcure CPTX** | | | 0.5 | | | |
| **Speedcure 7010*** | | | | 0.5 | | |
| **Omnipol TX** | | | | | 0.5 | |
| **Genopol TX** | | | | | | 0.5 |

| | | | | | | |
|---|---|---|---|---|---|---|
| * According to this invention | | | | | | |

The formulations were prepared by mixing the above constituents at target weight ratios, then gently stirring using magnetic stirrers at 40-50°C, 300 rpm for about 3 hours.

They were then cured at 12 µm film thicknesses under a 395 nm LED lamp using a belt curing instrument (Jenton International Ltd., model# JA2000VPXI-0000) with belt speed 20m/min and 100% lamp intensity. The substrate used was standard black and white paper (Leneta form 3N-31).

The number of passes under the lamp required to obtain surface cured coating (as determined when the surface of the coating is lightly scratched) or depth cure as determined by the 'thumb-twist' test (i.e. until no visible mark is made when a thumb is pressed down firmly onto the coating with a twisting motion) was recorded.

Curing speed was thus calculated using the belt speed divided by the passing number. Duplicate or triplicate curing was performed for each formulation, and average curing speed was then calculated for final comparison.

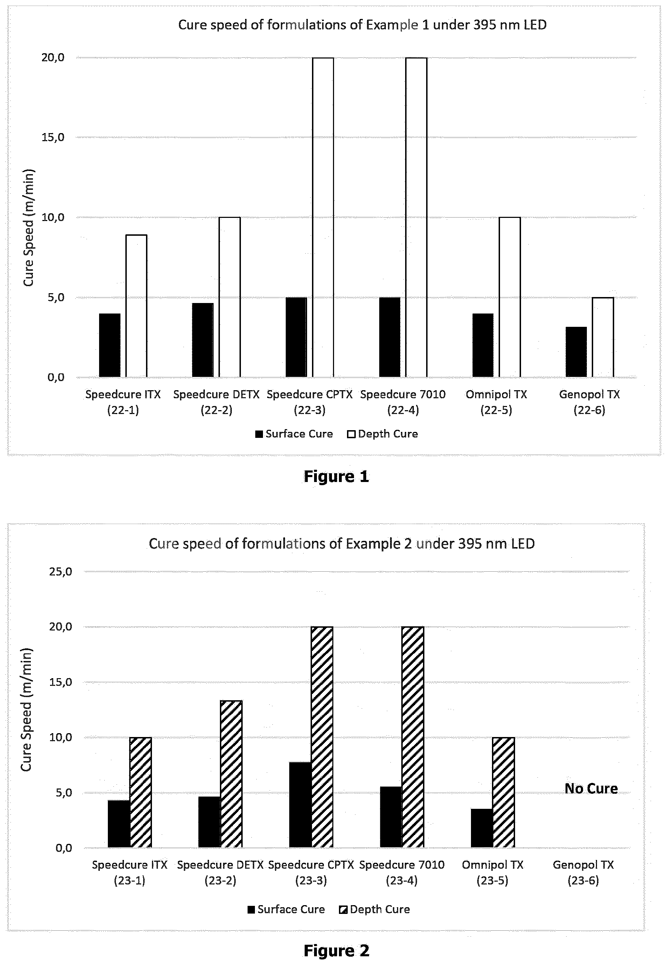

The results are shown in Figure 1. As can be seen, Speedcure^{®} 7010 is the only multifunctional TX able to achieve the same curing speed as CPTX at the same loading, although it has a lower TX content.

The Yellowing Index of the six formulations was also assessed using the ASTM E313 Standard: Speedcure^{®} 7010 further resulted in less yellowing than CPTX as evident from Table 2 below.

**Table 2**

| Photosensitizer (formulation) | Yellowness Index |
|---|---|
| Speedcure ITX (22-1) | 5.32 |
| Speedcure DETX (22-2) | 5.15 |
| Speedcure CPTX (22-3) | 6.87 |
| Speedcure 7010 (22-4) | 5.42 |
| Omnipol TX (22-5) | 5.3 |
| Genopol TX (22-6) | 5.77 |

### Example 2: Preparation and testing of curable compositions

Six formulations were prepared, which had the compositions provided in Table 3 below (the amounts are in % by weight based on the total weight of the composition).

**Table 3**

| | **23-1** | **23-2** | **23-3** | **23-4** | **23-5** | **23-6** |
|---|---|---|---|---|---|---|
| **Uvicure S105** | 72.5 | 72.5 | 72.5 | 72.5 | 72.5 | 72.5 |
| **Uvicure S140** | 25 | 25 | 25 | 25 | 25 | 25 |
| **Speedcure 938** | 2 | 2 | 2 | 2 | 2 | 2 |
| **Speedcure 2-ITX** | 0.5 | | | | | |
| **Speedcure DETX** | | 0.5 | | | | |
| **Speedcure CPTX** | | | 0.5 | | | |
| **Speedcure 7010*** | | | | 0.5 | | |
| **Omnipol TX** | | | | | 0.5 | |
| **Genopol TX** | | | | | | 0.5 |

| | | | | | | |
|---|---|---|---|---|---|---|
| * According to this invention | | | | | | |

The formulations were prepared and cured as described in Example 1. The curing speed was calculated as described in Example 1.

The results are shown in Figure 2. As can be seen, Speedcure^{®} 7010 is the only multifunctional TX able to achieve the same curing speed as CPTX at the same loading, although it has a lower TX content.

The Yellowing Index of the six formulations was also assessed using the ASTM E313 Standard: Speedcure^{®} 7010 further resulted in less yellowing than CPTX as evident from Table 4 below.

**Table 4**

| Photosensitizer (formulation) | Yellowness Index |
|---|---|
| Speedcure ITX (23-1) | 2.12 |
| Speedcure DETX (23-2) | 2.56 |
| Speedcure CPTX (23-3) | 3.96 |
| Speedcure 7010 (23-4) | 2.86 |
| Omnipol TX (23-5) | 2.20 |
| Genopol TX (23-6) | Not determined |

### Example 3: Preparation and testing of curable compositions

Nine formulations were prepared using the ingredients provided in Table 5 below (the amounts are in % by weight based on the total weight of the composition).

**Table 5**

| | **23-2** | **23-4** | **23-5** | **53-1** | **53-2** | **53-3** | **53-4** | **53-5** | **53-6** |
|---|---|---|---|---|---|---|---|---|---|
| **Uvicure S105** | 72.5 | 72.5 | 72.5 | 70.5 | 70.5 | 70.5 | 72.5 | 72.5 | 72.5 |
| **Uvicure S140** | 25 | 25 | 25 | 25 | 25 | 25 | 25 | 25 | 25 |
| **Speedcure 938** | 2 | 2 | 2 | | | | | | |
| **Speedcure 937** | | | | 4 | 4 | 4 | | | |
| **Speedcure 939** | | | | | | | 2 | 2 | 2 |
| **Speedcure DETX** | 0.5 | | | 0.5 | | | 0.5 | | |
| **Speedcure 7010*** | | 0.5 | | | 0.5 | | | 0.5 | |
| **Omnipol TX** | | | 0.5 | | | 0.5 | | | 0.5 |

| | | | | | | | | | |
|---|---|---|---|---|---|---|---|---|---|
| * According to this invention | | | | | | | | | |

The formulations were prepared and cured as described in Example 1. The curing speed was calculated as described in Example 1.

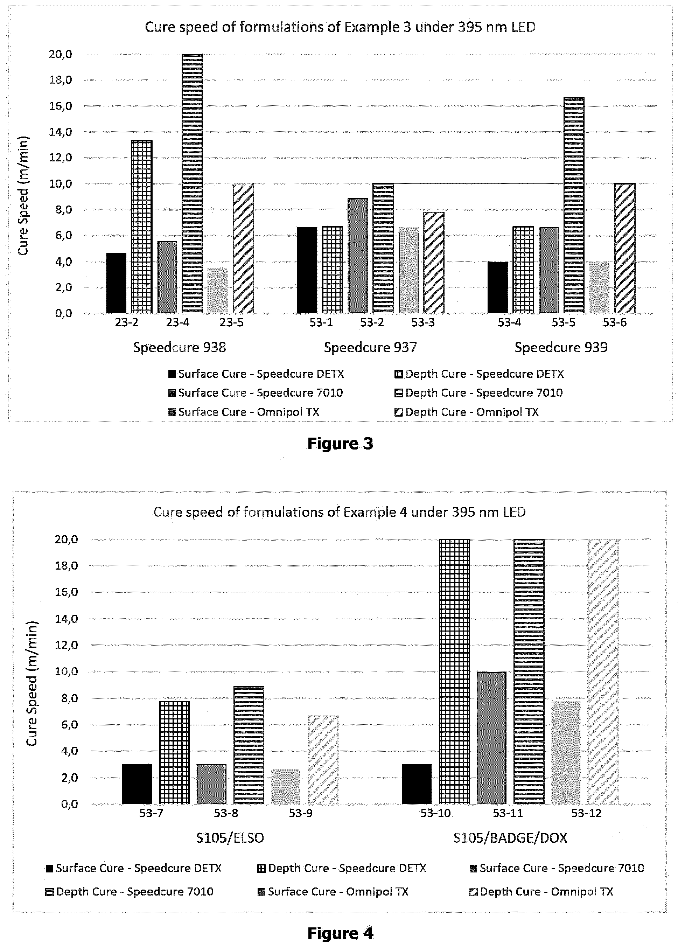

The results are shown in Figure 3. As can be seen, formulations comprising Speedcure^{®} 7010 have the highest curing speed.

### Example 4: Preparation and testing of curable compositions

Six formulations were prepared using the ingredients provided in Table 6 below (the amounts are in % by weight based on the total weight of the composition).

**Table 6**

| | **53-7** | **53-8** | **53-9** | **53-10** | **53-11** | **53-12** |
|---|---|---|---|---|---|---|
| **Uvicure S105** | 72.5 | 72.5 | 72.5 | 37.5 | 37.5 | 37.5 |
| **ELSO** | 25 | 25 | 25 | | | |
| **BADGE** | | | | 30 | 30 | 30 |
| **DOX** | | | | 30 | 30 | 30 |
| **Speedcure 938** | 2 | 2 | 2 | 2 | 2 | 2 |
| **Speedcure DETX** | 0.5 | | | 0.5 | | |
| **Speedcure 7010*** | | 0.5 | | | 0.5 | |
| **Omnipol TX** | | | 0.5 | | | 0.5 |

| | | | | | | |
|---|---|---|---|---|---|---|
| * According to this invention | | | | | | |

The formulations were prepared and cured as described in Example 1. The curing speed was calculated as described in Example 1.

The results are shown in Figure 4. As can be seen, formulations comprising Speedcure^{®} 7010, Speedcure^{®} S105 and ELSO have the highest depth cure whereas formulations comprising Speedcure^{®} 7010, Speedcure S105, BADGE and DOX have the highest surface cure.

## Claims

1. A curable composition comprising:
a) a cationically polymerizable component;
b) a cationic photoinitiator component comprising at least one iodonium salt; and
c) a photosensitizer component comprising at least one multifunctional halogenated thioxanthone.

2. The composition of claim 1, wherein component a) comprises at least one cationically polymerizable compound selected from the group consisting of: an epoxide; an oxetane; an oxolane; a cyclic acetal; a cyclic lactone; a thiirane; a thietane; a spiro orthoester; a vinyl ether; and mixtures thereof; preferably a mixture of at least one epoxide and at least one oxetane.

3. The composition according to claim 1 or 2, wherein component b) comprises at least one iodonium salt selected from diphenyliodonium triflate, diphenyliodonium pyrenesulfonate, diphenyliodonium dodecylphenylsulfonate, diphenyliodonium hexafluoroantimonate, bis-(4-t-butylphenyl)-iodonium hexafluorophosphate, bis-(4-t-butylphenyl)-iodonium chloride, bis(4-t-butylphenyl) iodonium tetraphenylborate, bis(4-t-butylphenyl) iodonium tosylate, bis-(4-t-butylphenyl)-iodonium hexafluoroantimonate, bis(4-t-butylphenyl) iodonium pentafluorophenylborate, bis-(4-t-butylphenyl)-iodonium triflate, bis-(4-t-butylphenyl)-iodonium bis(trifluoromethane)sulfonimide, [4-(2-hydroxy-1- tetradecyloxy)-phenyl]phenyliodonium hexafluoroantimonate, [4-(2-hydroxy-1- tetradecyloxy)-phenyl]phenyliodonium hexafluorophosphate, 4-isopropyl-4'-methyldiphenyliodonium tetrakis(pentafluorophenyl)borate, preferably bis-(4-t-butylphenyl)-iodonium hexafluorophosphate.

4. The composition according to any one of claims 1 to 3, wherein component c) comprises at least one multifunctional thioxanthone having the following structure (VII): 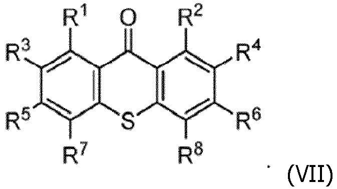 wherein
R¹, R², R³, R⁴, R⁵, R⁶, R⁷ and R⁸ are independently selected from hydrogen, halogen, hydroxyl, thiol, alkyl, alkenyl, cycloalkyl, heterocycloalkyl, aryl, heteroaryl, alkoxy, aryloxy, thioalkyl, thioaryl, alkaryl, aralkyl, haloalkyl, perfluoroalkyl, alkylamino, alkylthiol, hydroxyalkyl, -CN, NO₂, -NRₐR_{b}, -C(=O)-Rₐ, -C(=O)-ORₐ, -C(=O)-NRₐR_{b}, -NRₐ-C(=O)-R_{b}, -O-C(=O)-NRₐR_{b}, -NRₐ-C(=O)-O-R_{b}, -SO₂-NRₐR_{b} and a moiety bearing at least one thioxanthone unit, with the proviso that one of R¹, R², R³, R⁴, R⁵, R⁶, R⁷ and R⁸ is a moiety bearing at least one thioxanthone unit and at least one of R¹, R², R³, R⁴, R⁵, R⁶, R⁷ and R⁸ is halogen, preferably one of R¹, R², R³, R⁴, R⁵, R⁶, R⁷ and R⁸ is chlorine;
each Rₐ and R_{b} independently H, alkyl, aryl or aralkyl.

5. The composition according to any one of claims 1 to 4, wherein component c) comprises at least one multifunctional thioxanthone having the following chemical structure (VIII): 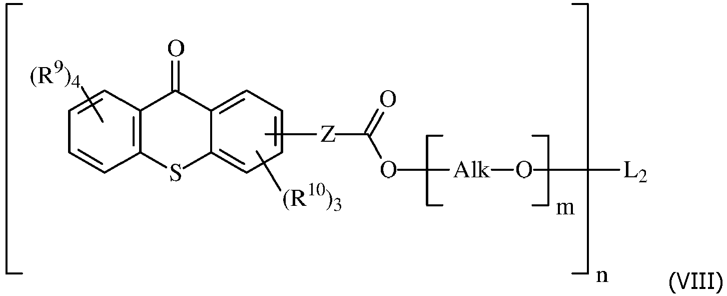 wherein
each R⁹ and each R¹⁰ is independently selected from hydrogen, halogen, hydroxyl, thiol, alkyl, alkenyl, cycloalkyl, heterocycloalkyl, aryl, heteroaryl, alkoxy, aryloxy, thioalkyl, thioaryl, alkaryl, aralkyl, haloalkyl, perfluoroalkyl, alkylamino, alkylthiol, hydroxyalkyl, -CN, NO₂, -NRₐR_{b}, -C(=O)-Rₐ, -C(=O)-ORₐ, -C(=O)-NRₐR_{b}, -NRₐ-C(=O)-R_{b}, -O-C(=O)-NRₐR_{b}, -NRₐ-C(=O)-O-R_{b} and -SO₂-NRₐR_{b}, wherein each Rₐ and R_{b} is independently H, alkyl, aryl or aralkyl with the proviso that one of R¹⁰ is halogen, preferably chlorine;
each Z is independently selected from direct bond, alkylene, oxyalkylene, thioalkylene and ketoalkylene;
each Alk is independently an alkylene;
each m is independently an integer from 0 to 20;
n is an integer higher than 2;
L₂ is a n-valent linker.

6. The composition according to claim 5, wherein each Z is independently selected from direct bond, alkylene of formula (Z1), oxyalkylene of formula (Z2), thioalkylene of formula (Z3), ketoalkylene of formula (Z4) and aminoalkylene of formula (Z5):
*-(CR¹¹R¹²)ₚ-# (Z1)
*-O-(CR¹³R¹⁴)_{q}-# (Z2)
*-S-(CR¹⁵R¹⁶)ᵣ-# (Z3)
*-C(=O)-(CR¹⁷R¹⁸)ₛ-# (Z4)
*-NR¹⁹-(CR²⁰R²¹)ₜ-# (Z5)
wherein
each R¹¹, R¹², R¹³, R¹⁴, R¹⁵, R¹⁶, R¹⁷, R¹⁸, R²⁰ and R²¹ is independently H or alkyl, in particular H;
R¹⁹, is H, alkyl or aryl;
each p, q, r, s and t is independently an integer from 1 to 6, in particular 1 or 2; the symbol * represents a point of attachment to the thioxanthone moiety; the symbol # represents a point of attachment to a -C(=O)-O-[Alk-O]ₘ-L₂ moiety.

7. The composition according to claim 5 or 6 wherein L₂ corresponds to the residue of a polyol selected from glycerol, di-, tri- or tetraglycerol, trimethylolmethane, trimethylolethane, trimethylolpropane, di(trimethylolpropane), pentaerythritol, di(pentaerythritol), an alditol tris(2-hydroxyethyl)isocyanurate, preferably a polyol selected from di-, tri- or tetraglycerol, di(trimethylolpropane), pentaerythritol, di(pentaerythritol) and sorbitol, more preferably pentaerythritol.

8. The composition according to any one of claims 1 to 7, wherein component c) comprises at least one multifunctional halogenated thioxanthone having the following chemical structure (IX): 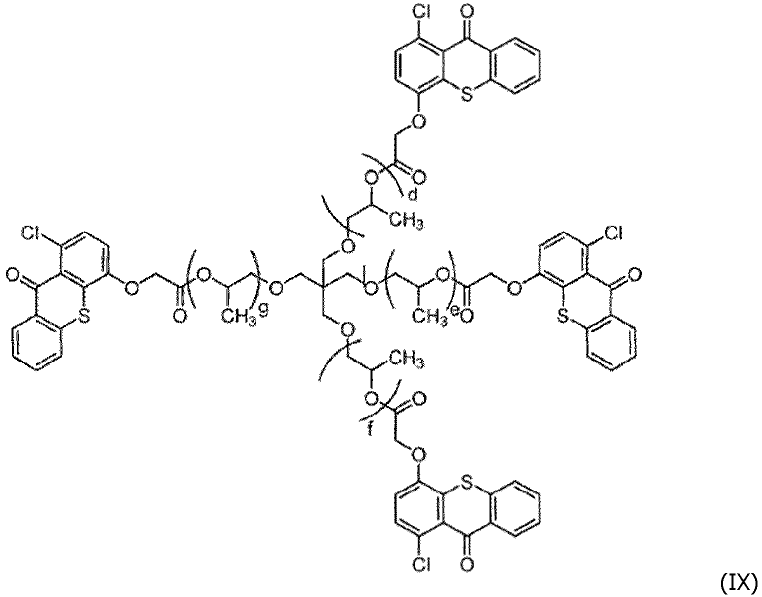 wherein d+e+f+g is an integer from 1 to 20, for instance from 1 to 15.

9. The composition according to any one of claims 1 to 8, wherein the composition further comprises d) a (meth)acrylate-functionalized component comprising at least one (meth)acrylate-functionalized compound, in particular a (meth)acrylate-functionalized monomer.

10. The composition according to any one of claims 1 to 9, further comprises a free-radical photoinitiator component e) comprising at least one free-radical photoinitiator, in particular a Norrish type I free-radical photoinitiator, more particularly a phosphine oxide or an acetophenone.

11. The composition according to any one of claims 1 to 10, wherein the composition is an ink, coating, sealant, adhesive, molding, or 3D printing composition, in particular an ink or a 3D-printing composition.

12. A process for the preparation of a cured product, comprising curing the composition according to any one of claims 1 to 11, in particular by exposing the composition to radiation such as UV, near-UV, visible, infrared and/or near-infrared radiation or to an electron beam.

13. A cured product obtained by curing the composition according to any one of claims 1 to 11 or according to the process of claim 12.

14. A cured product according to claim 13, wherein the cured product is an ink, a coating, a sealant, an adhesive, a molded article or a 3D-printed article.

15. Use of a multifunctional halogenated thioxanthone as a photosensitizer of a photoinitiator component comprising at least one iodonium salt.
